# EUROPEAN PATENT SPECIFICATION

(11) **EP 2 014 173 B1**
(45) Date of publication and mention of the grant of the patent: **10.08.2016**
(21) Application number: 08380182.9
(22) Date of filing: 23.06.2008
(51) Int. Cl.: A23L 7/10, A23C 11/10

(54) **Method for obtaining a soy-based drinkable liquid food product and drinkable liquid food product**
Verfahren zum Erhalten eines Sojagetränk-Lebensmittels und trinkbares Flüssiglebensmittel
Procédé d'obtention d'un produit alimentaire liquide buvable à base de soja et produit alimentaire liquide buvable

(30) Priority: 29.06.2007 ES 200701817
(43) Date of publication of application: 14.01.2009
(73) Proprietor: Liquats Vegetals SA, Girona (ES)
(72) Inventor: Erra Serrabasa, Josep Maria, 17005 Girona (Girona) (ES)
(74) Representative: Gislon, Gabriele

(56) References cited:
- ANONYMOUS: "Section II: Food Commodity Fact Sheets (Corn Soy Milk)" USAID FOOD FOR PEACE, [Online] 1 January 2006 (2006-01-01), pages 1-3, XP002496622 Retrieved from the Internet: URL:http://www.usaid.gov/our_work/humanita rian_assistance/ffp/crg/fscornsoymilk.htm> [retrieved on 2008-09-19]
- DATABASE WPI Week 200417 Thomson Scientific, London, GB; AN 2004-169955 XP002496626 & CN 1 452 874 A (TIAN G) 5 November 2003 (2003-11-05)
- DATABASE WPI Week 198438 Thomson Scientific, London, GB; AN 1984-234697 XP002496627 "Bean milk drink prodn. - by combining glutinous starch, shear, salt and opt. chemical seasoning and spice with bean milk" & JP 59 140833 A (TAMURA YAKUHIN KOGY) 13 August 1984 (1984-08-13) -& JP 59 140833 A (TAMURA YAKUHIN KOGYO KK) 13 August 1984 (1984-08-13)
- DATABASE WPI Week 198809 Thomson Scientific, London, GB; AN 1988-059813 XP002496628 "Solid soy milk - obtd. by grinding water-swelled soy bean, boiling, filtering, mixing with protein and adding corn starch etc." & JP 63 014676 A (KAWBATA Y) 21 January 1988 (1988-01-21) -& JP 63 014676 A (KAWBATA YASUTSUGU) 21 January 1988 (1988-01-21)
- DATABASE WPI Week 198639 Thomson Scientific, London, GB; AN 1986-255865 XP002496629 "Soybean juice prepn. with added taste of buckwheat - includes adding buckwheat flour to soybean protein liq. obtd. by grinding soybeans in water" & JP 61 185160 A (MIYAMOTO SOBA SEIFU) 18 August 1986 (1986-08-18) -& JP 61 185160 A (FUKUYA NORIYUKI) 18 August 1986 (1986-08-18)
- DATABASE WPI Week 199737 Thomson Scientific, London, GB; AN 1997-396987 XP002496630 "Health food - prepared by crushing and boiling soybeans soaked in water, pressing, mixing buckwheat stems and leaves in obtained milk and solidifying" & JP 09 173015 A (MOCHIDA M) 8 July 1997 (1997-07-08) -& JP 09 173015 A (TANAKA KENJI; MOCHIDA MINORU) 8 July 1997 (1997-07-08)

## Description

### Field of the Art

The present invention relates to a method for obtaining a soy-based drinkable liquid food product and to a drinkable liquid food product obtained.

The invention provides a drinkable liquid food product incorporating as components soy and a grain or seed of a herbaceous plant having edible seeds.

In a first version intended for people with a food intolerance, said chosen grain or seed is gluten-free, and in a second version said grain or seed contains gluten.

The tested grains include corn, millet, barley, oat, spelt and kamut.

The invention also contemplates obtaining a product from the different liquid phases obtained during the process which allow obtaining from a sweet beverage to a complete beverage.

### Prior State of the Art

Several food products containing soy, some of them being drinkable liquids and others being in a solid format, have been known for years, the drinkable products having in common the fact that they form a beverage known as "soy milk or beverage".

Some proposals relating to soy milk beverages are described in patent ES-A-553157, belonging to the public domain, relating to a process for producing enriched soy milk, and in patent ES-A-2130507 which relates to a soy milk beverage enriched in calcium and to a process for preparing the same.

Formulations containing soya and corn are known as Corn Soy Milk e.g. from www.usaid.gov/our work/humanita (01.01.2006 - XP002496622). These formulations are in a dry form and are made of corn meal, soy flour, non-fat dry milk, soybean oil and vitamins/minerals. The dry mixture is added with water and cooked before consumption.

CN 1452874 discloses a porridge-like formulation including milk, soy milk and millet. Cow milk and soybean milk are used in a percent 20-80% by weight. Millet is baked and worked into noodles.

JP59-140833 discloses a composition in which glutinous starch is added to soy milk with sugar and salt; possibly chemical aromas and viscosity enhancers are added. JP63-014676 concerns the production of a solid soy milk by addition of soy proteins, corn starch , glucose, citric acid and aromas to a liquid soy milk; the product is solid and is used to be chewed.

JP 1985-023628 teaches to prepare a slurry of soybeans ground in water and to add to the slurry 20-40% of buckwheat flour; the product is preferably coagulated.

JP 1995-351519 discloses a process to prepare a coagulated soybean milk containing powder of stems and of leaves of buckwheat. The final solid product is cut into shape.

In addition, patent ES-A-2050080 describes a soy-based food product and a process for preparing the same which, even though, unlike the patents mentioned in the preceding paragraph, it does not contain animal milk, it cannot be drunk either since it is in the form of a homogenous paste formed by soy, water and other ingredients which, as explained in detail in the process, is subjected to freezing for its subsequent packaging.

It seems necessary to offer an alternative to the state of the art that makes it possible to obtain a soy-based food product, incorporating a series of additional ingredients, and which is a drinkable liquid product without integrating animal milk.

It is also necessary to offer a drinkable liquid product with a considerable allowance of starch or starch derivatives that are gluten-free, whereby providing a nutritionally rich and neutral food source against possible intolerances or adverse reactions of consumers.

The properties of the proposed liquid food can extend to the use of grains or seeds with gluten, excluding in this case people with gluten intolerance.

### Summary of the Invention

The present invention relates in a first aspect to a method for obtaining a soy-based drinkable liquid food product, comprising the preparation of a mixture with the following ingredients:
- a source of starch in the form of a grain or seed of a grass plant or else a seed of a herbaceous plant having edible seeds,
- soy, and
- water
with the particularity that said grain or seed and said soy are already crushed or are crushed while preparing the mixture in water in the presence of enzymes and heat supply for its activation, for transforming the starch into sugar, such that said mixture produces a fluid paste from which, by centrifugation, a first part is separated by decanting or filtration, leaving a second liquid part giving said liquid food product, in a liquid form such as a solution. The mentioned heat supply to the described process of preparing the mixture is carried out in one version by means of using hot water.

According to this invention, the mentioned grain or seed of a grass plant is chosen from a group comprising corn, sorghum and millet, i.e., gluten-free grains, and said seed of a herbaceous plant having edible seeds is chosen from a group comprising buckwheat, amaranth and quinoa, i.e., gluten-free seeds that are grown and commonly used as grains given the high starch content they supply.

As indicated, grains with gluten such as barley, oat, spelt and kamut can also be used, whereby broadening the scope of application of the product. The use of seeds of herbaceous plants having edible gluten-free seeds is also contemplated.

The invention has also provided using instead of a grain or seed, the mixture of two or more of such elements combined with the soy.

According to a first embodiment of the method according to the invention, a separate crushing step is performed to crush said grain or seed in hot water at a temperature of between 40 and 65°C, in the presence of enzymes (which will depend on the temperature used or on the gelling temperature (passing to a gel state) of the starch of the grain or seed used) intended for modifying the composition of the liquid obtained depending on its sweetness or maltodextrin content, this hot liquid or suspension then being supplied to the mixture together with the soy, also in the form of grain, which is crushed during the mixing step.

Performing a separate crushing step for crushing said soy in hot water at a temperature of 75- 85°C has alternatively been provided so that it may later be supplied to the mixture with said grain or seed already crushed and in the form of suspension.

Finally, the method can be implemented by crushing both ingredients, grain or seed and soy, at the same time that the mixture is being carried out, in hot water or in water with a heat supply and with the controlled addition of enzymes.

The mentioned enzymes comprise only alpha-amylases, and preferably alpha-amylases in a first step and subsequently amylases and/or glucosidases or a combination of both.

According to the proposal of the invention, the mentioned mixture comprises:
- water as 80-95% of the total volume of the solution;
- soy in a ratio by weight with respect to the total dry matter present in the solution between 50 and 70%, and
- grain or seed in a ratio between 30 and 50%.

In addition, said soy and said grain or seed (either in separate steps or together) are crushed by fine grinding.

The invention likewise comprises a soy-based drinkable liquid food product, which is presented in the form of a solution containing:
- grain or seed of a grass plant or a seed of a herbaceous plant having edible seeds;
- soy; and
- water,
said grain or seed and said soy being finely crushed to formulate a liquid form of the product such as a solution.

The product further comprises enzymes including alpha-amylases, amylases and/or glucosidases and products obtained by the action of enzymes on said grain or seed, activated by a heat supply advantageously through the water in which the mixture is performed.

Other features of the invention will be observed in the detailed description of several embodiments which are detailed below by way of a non-limiting explanation.

### Description of Several Embodiments

When corn is used as the grass plant of those mentioned, the method of the present invention can be defined according to the following steps:
a) mixing water with at least soy and corn, at least one of the two ingredients, soy or corn, in granular state;
b) crushing said mixture until obtaining a fluid paste, and
c) centrifuging said fluid paste to separate by decanting or filtration, the solid part or sediment and use the liquid part to obtain said food product in the form of a dispersion.

For a first embodiment, the method comprises performing said step a) for both ingredients, both soy and corn, in granular state.

A second embodiment proposes performing said step a) only for the soy in granular state, having performed a step of at least crushing said corn prior to said step a).

For another preferred embodiment, the method comprises:
- preparing the corn by crushing it in hot water (between 40 and 65°C) in the presence of enzymes such as amylase and/or glucosidase to be able to modify the composition and obtain a sweet liquid rich in maltodextrins; and
- mixing said resulting hot liquid with the soy in grain form in a ratio of approximately 70% soy and approximately 30% corn, then crushing and thus obtaining a fluid paste which, by centrifugation, provides the basic beverage.

Different ingredients such as calcium salts or other minerals, vitamins and stabilizers can be added to this obtained beverage, such ingredients comprising 0.5% of the total dry matter by weight.

In the embodiment described, the method will lead to a soy-based, drinkable liquid food product, made up of a corn and soy solution in water, the former two components being finely crushed.

Water forms 80-95% of the volume of the solution, whereas the participation in the dry matter (approximately 9-11 %) of the other two basic ingredients is the following:
soy: 50 - 70%; and
corn: 30-50%

As indicated, it is possible to further add to this food product one or more additional ingredients from the group consisting of the following ingredients: calcium salts or other minerals, vitamins and stabilizers, comprising up to 0.5% of the total dry matter.

The addition of other ingredients such as soluble grains, algae and cocoa, or a combination thereof, comprising at most 15% of the total dry matter, has also been provided.

In the case of using another grain, particularly millet, instead of corn, its ratio in the mixture shall be slightly greater than the ratio indicated for corn since millet has a lower starch supply, for example, an amount of 35-55% with respect to the total dry matter being used.

A person skilled in the art could introduce changes and modifications in the described embodiments without departing from the scope of the invention as it is defined in the attached claims. In particular, the invention encompasses variations in the ratio of the grains used with respect to the soy, and the type and number of grains used.

## Claims

1. A method for obtaining a soy-based drinkable liquid food product, **characterized in that** it comprises preparing a mixture with the following ingredients:
- a source of starch extracted from a grass plant providing edible grains or seeds or from a herbaceous plant providing edible seeds,
- soy, and
- water wherein said grain or seed and said soy are already crushed or are crushed during the preparation of the mixture in the presence of enzymes and heat supply for its activation so that said mixture produces a fluid paste from which a liquid part is separated by centrifugation, which liquid part gives said food product.

2. The method according to claim 1, **characterized in that** said heat supply is carried out through heating the water used to carry out the mixture.

3. The method according to claim 1, **characterized in that** said separation of a liquid part from said fluid paste is done by decanting or filtration and **in that** the obtained drinkable liquid food product is presented in the form of a solution.

4. The method according to claim 1, **characterized in that** said source of starch is gluten-free and **in that** said grain or seed of a grass plant is chosen from a group comprising corn, sorghum or millet, and said seed of a herbaceous plant having edible seeds is chosen from a group comprising buckwheat, amaranth or quinoa.

5. The method according to claim 1, **characterized in that** the source of starch contains gluten and **in that** said grain or seed of a grass plant is chosen from a group comprising barley, oat, spelt or kamut.

6. The method according to claim 1, **characterized in that** said source of starch comprises the mixture of at least two grains or seeds.

7. The method according to claim 1, **characterized in that** it comprises performing a separate crushing step for crushing said grain or seed in hot water at a temperature of 40-65 deg. C in the presence of enzymes, this hot liquid being supplied to the mixture.

8. The method according to claim 1, **characterized in that** it comprises performing a separate crushing step for crushing said soy in hot water at a temperature of 75-85 deg. C for later supplying it to the mixture.

9. The method according to claim 1, **characterized in that** it comprises crushing both ingredients, grain or seed and soy, at the same time the mixture is being carried out in hot water or in water with a heat supply and with a controlled addition of enzymes.

10. The method according to claim 3, **characterized in that** said mixture comprises
- water as 80-95% of the total volume of the solution;
- soy in a ratio by weight with respect to the total dry matter present in the solution between 60 and 80%, and
- grain or seed in a ratio between 20 and 40%.

11. The method according to claim 10, **characterized in that** it comprises adding to the solution at least one additional ingredient from the group consisting of the following ingredients: calcium salts or other minerals, vitamins, stabilizers, (gluten-free) soluble grains, algae and cocoa, or a combination thereof, said ingredients comprising 0-5% of the total of said dry matter.

12. The method according to claim 11, **characterized in that** it comprises a final processing step for homogenizing the mixture, giving a stable emulsion.

13. A drinkable liquid food product in the form of a solution as obtainable according to any claim 1 to 12, comprising a source of starch extracted from a grass plant providing edible grains or seeds or from a herbaceous plant providing edible seeds, soy and water, **characterized in** comprising enzymes including alpha-amylases, amylases and/or glucosidases and products obtained by the action of enzymes on said grain or seed.

14. The liquid food product according to claim 13, **characterized in that** said source of starch is gluten-free and **in that** said grain or seed of a grass plant is chosen from a group comprising corn, sorghum or millet, and said seed of a herbaceous plant providing edible seeds is chosen from a group comprising buckwheat, amaranth or quinoa.

15. The liquid food product according to claim 13, **characterized in that** the source of starch contains gluten and **in that** said grain or seed of a grass plant is chosen from a group comprising barley, oat, spelt or kamut.

## Patentansprüche

1. Verfahren zum Erhalten eines auf Soja basierten trinkbaren Flüssiglebensmittel, **dadurch gekennzeichnet, dass** es die Zubereitung einer Mischung mit den folgenden Zutaten umfasst:
- eine Quelle von Stärke, welche aus einer Graspflanze die essbare Körner oder Samen bereitstellt oder aus einer krautigen Pflanze die essbare Samen bereitstellt extrahiert wird,
- Soja, und
- Wasser, wobei die genannten Körner oder Samen und die genannte Soja bereits zerkleinert sind oder während der Zubereitung der Mischung in Anwesenheit von Enzymen und Wärmezufuhr für deren Aktivierung zerkleinert werden, so dass die genannte Mischung eine fließbare Paste produziert, aus welcher einen flüssigen Anteil durch Zentrifugierung getrennt wird, wobei der flüssige Anteil das genannte Lebensmittel darstellt.

2. Verfahren nach Anspruch 1, **dadurch gekennzeichnet, dass** die genannte Wärmezufuhr mittels Erwärmung des für die Herstellung der Mischung verwendeten Wassers durchgeführt wird.

3. Verfahren nach Anspruch 1, **dadurch gekennzeichnet, dass** die genannte Trennung eines flüssigen Anteils aus der genannten fließbaren Paste durch Dekantierung oder Filtrierung durchgeführt wird und dass das erhaltene trinkbare Flüssiglebensmittel in Form einer Lösung dargeboten wird.

4. Verfahren nach Anspruch 1, **dadurch gekennzeichnet, dass** die genannte Quelle von Stärke glutenfrei ist und dass die genannten Körner oder Samen einer Graspflanze aus einer Gruppe ausgewählt werden, umfassend Mais, Sorghum oder Rispenhirse, und die genannte Samen einer krautigen Pflanze mit essbaren Samen aus einer Gruppe ausgewählt wird, umfassend Buchweizen, Amarant oder Quinoa.

5. Verfahren nach Anspruch 1, **dadurch gekennzeichnet, dass** die Quelle von Stärke Gluten enthält und dass die genannten Körner oder Samen einer Graspflanze aus einer Gruppe ausgewählt werden, umfassend Gerste, Hafer, Dinkel oder Kamut.

6. Verfahren nach Anspruch 1, **dadurch gekennzeichnet, dass** die genannte Quelle von Stärke die Mischung aus mindestens zwei Körnern oder Samen umfasst.

7. Verfahren nach Anspruch 1, **dadurch gekennzeichnet, dass** es die Durchführung eines getrennten Zerkleinerungsschritts für die Zerkleinerung der genannten Körner oder Samen in Heißwasser bei einer Temperatur von 40-65ºC in Anwesenheit von Enzymen, wobei diese heiße Flüssigkeit der Mischung zugeführt wird.

8. Verfahren nach Anspruch 1, **dadurch gekennzeichnet, dass** es die Durchführung eines getrennten Zerkleinerungsschritts für die Zerkleinerung der genannten Soja in Heißwasser bei einer Temperatur von 75-85ºC, um sie später der Mischung zuzuführen.

9. Verfahren nach Anspruch 1, **dadurch gekennzeichnet, dass** es die Zerkleinerung sowohl der Zutaten, der Körner oder der Samen als auch der Soja umfasst, wobei gleichzeitig die Mischung in Heißwasser oder in Wasser mit einer Wärmezufuhr und mit einem kontrollierten Zusatz von Enzymen durchgeführt wird.

10. Verfahren nach Anspruch 3, **dadurch gekennzeichnet, dass** die genannte Mischung Folgendes umfasst:
- Wasser zu 80-95% des gesamten Volumens der Lösung;
- Soja in einem Gewichtsverhältnis in Bezug auf die in der Lösung vorhanden Trockenmasse zwischen 60 und 80%, und
- Körner oder Samen in einem Verhältnis zwischen 20 und 40%.

11. Verfahren nach Anspruch 10, **dadurch gekennzeichnet, dass** es den Zusatz zu der Lösung mindestens einer zusätzlichen Zutat aus der Gruppe bestehend aus den folgenden Zutaten umfasst: Calciumsalzen oder anderen Mineralien, Vitaminen, Stabilisatoren, (glutenfreien) löslichen Körnern, Algen und Kakao, oder einer Kombination derselben, wobei die genannten Zutaten 0-5% der Gesamtheit der genannten Trockenmasse umfassen.

12. Verfahren nach Anspruch 11, **dadurch gekennzeichnet, dass** es einen endgültigen Verarbeitungsschritt für die Homogenisierung der Mischung umfasst, welcher eine stabile Emulsion bereitstellt.

13. Trinkbares Flüssiglebensmittel in Form einer Lösung welches nach einem der Ansprüche 1 bis 12 erhältlich ist, umfassend eine Quelle von Stärke, welche aus einer Graspflanze die essbare Körner oder Samen bereitstellt oder aus einer krautigen Pflanze die essbare Samen bereitstellt extrahiert wird, Soja und Wasser, **dadurch gekennzeichnet, dass** es Enzyme, einschließlich Alpha-Amylasen, Amylasen und/oder Glucosidasen, und Produkte, welche die Wirkung der Enzyme auf die genannten Körner oder Samen erhalten werden, umfasst.

14. Flüssiglebensmittel nach Anspruch 13, **dadurch gekennzeichnet, dass** die genannte Quelle von Stärke glutenfrei ist und dass die genannten Körner oder Samen einer Graspflanze aus einer Gruppe ausgewählt werden, umfassend Mais, Sorghum oder Rispenhirse, und die genannten Samen einer krautigen Pflanze die essbare Samen bereitstellt aus einer Gruppe ausgewählt werden, umfassend Buchweizen, Amarant oder Quinoa.

15. Flüssiglebensmittel nach Anspruch 13, **dadurch gekennzeichnet, dass** die Quelle von Stärke Gluten enthält und dass die genannten Körner oder Samen einer Graspflanze aus einer Gruppe ausgewählt werden, umfassend Gerste, Hafer, Dinkel oder Kamut.

## Revendications

1. Une méthode pour obtenir une boisson alimentaire à base de soja **caractérisée en ce qu'**elle comporte la préparation d'un mélange avec les ingrédients suivants:
- une source d'amidon extrait d'une plante herbacée fournissant des grains ou des graines comestibles ou d'une plante herbacée fournissant des graines comestibles,
- du soja, et
- de l'eau où ce grain ou cette graine et ce soja sont déjà pilés ou ils sont pilés durant la préparation du mélange en la présence d'enzymes et l'apport de chaleur pour son activation de sorte que ce mélange produit une pâte fluide dont une partie liquide est séparée par centrifugation, cette partie liquide donnant cette denrée.

2. La méthode conformément à la revendication 1, **caractérisée en ce que** cet apport de chaleur est fait par chauffage de l'eau utilisée pour effectuer le mélange.

3. La méthode conformément à la revendication 1, **caractérisée en ce que** cette séparation d'une partie liquide de cette pâte fluide est faite par décantation ou filtration et **en ce que** la boisson alimentaire obtenue est présentée sous la forme d'une solution.

4. La méthode conformément à la revendication 1, **caractérisée en ce que** cette source d'amidon est sans gluten et **en ce que** ce grain ou cette graine d'une plante herbacée est sélectionné d'un groupe comprenant du blé, du sorgho ou du millet et cette graine de plante herbacée ayant des graines comestibles est sélectionnée d'un groupe comprenant le blé noir, l'amarante ou le quinoa.

5. La méthode conformément à la revendication 1, **caractérisée en ce que** la source d'amidon contient du gluten et que ce grain ou cette graine d'une plante herbacée est sélectionné d'un groupe comprenant l'orge, l'avoine, l'épeautre ou le kamut.

6. La méthode conformément à la revendication 1, **caractérisée en ce que** cette source d'amidon comprend le mélange d'au moins deux grains ou gaines.

7. La méthode conformément à la revendication 1, **caractérisée en ce qu'**elle comporte l'étape à part de pilage pour piler ce grain ou cette graine dans de l'eau chaude à une température de 40-65ºC en la présence d'enzymes, ce liquide chaud étant alimenté au mélange.

8. La méthode conformément à la revendication 1, **caractérisée en ce qu'**elle comporte effectuer une étape à part de pilage pour plier ce soja dans de l'eau chaude à une température de 75-85 ºC pour alimenter postérieurement ce mélange.

9. La méthode conformément à la revendication 1, **caractérisée en ce qu'**elle comporte le pilage des deux ingrédients, grain ou graine et soja, en même temps que le mélange est fait dans de l'eau chaude ou dans de l'eau ayant un apport de chaleur et une addition contrôlée d'enzymes.

10. La méthode conformément à la revendication 3, **caractérisée en ce que** ce mélange comprend:
- de l'eau comme 80-95% du volume total de la solution.
- du soja dans un ratio par poids par rapport à la matière sèche totale présente dans la solution entre 60 et 80%, et
- du grain ou de la graine dans un ratio entre 20 et 40%.

11. La méthode conformément à la revendication 10, **caractérisée en ce qu'**elle comporte l'addition à la solution d'au moins un ingrédient additionnel du groupe consistant en les ingrédients suivants: des sels de calcium ou d'autres minéraux, des vitamines, des stabilisateurs, des grains (sans gluten) solubles, des algues et du cacao, ou une combinaison de ceux-ci, ces ingrédients comprenant 0-5% du total de cette matière sèche.

12. La méthode conformément à la revendication 11, **caractérisée en ce que** qu'elle comporte une étape de traitement final pour homogénéiser le mélange, donnant une émulsion stable.

13. Une boisson alimentaire sous forme de solution pouvant être obtenue conformément à une quelconque des revendications 1 à 12, comprenant une source d'amidon extrait d'une plante herbacée fournissant des grains ou des graines comestibles ou d'une plante herbacée fournissant des graines comestibles, du soja et de l'eau, **caractérisée en ce qu'**elle comprend des enzymes y compris des alpha-amylases, des amylases et/ou des glucosidases et des produits obtenus par l'action d'enzymes sur ce grain ou cette graine.

14. La boisson alimentaire conformément à la revendication 13, **caractérisée en ce que** cette source d'amidon est sans gluten et **en ce que** ce grain ou cette graine d'une plante herbacée est sélectionné d'un groupe comprenant du blé, du sorgho ou du millet, et cette graine d'une plane herbacée fournissant des graines comestibles d'un groupe comprenant le blé noir, l'amarante ou le quinoa.

15. La boisson alimentaire conformément à la revendication 13, **caractérisée en ce que** la source d'amidon contient du gluten et **en ce que** ce grain ou cette graine d'une plante herbacée est sélectionné d'un groupe comprenant l'orge, l'avoine, l'épeautre ou le kamut.
